(19) Europäisches Patentamt
European Patent Office
Office européen des brevets

(11) EP 3 214 103 B1

(12) **EUROPEAN PATENT SPECIFICATION**

(45) Date of publication and mention of the grant of the patent:
**25.09.2019 Bulletin 2019/39**

(21) Application number: **15854488.2**

(22) Date of filing: **27.08.2015**

(51) Int Cl.:
***C08G 59/50*** (2006.01) ***C08J 5/24*** (2006.01)
***C08G 59/28*** (2006.01) ***C08G 59/32*** (2006.01)
***C08L 63/00*** (2006.01)

(86) International application number:
**PCT/JP2015/074190**

(87) International publication number:
**WO 2016/067736 (06.05.2016 Gazette 2016/18)**

(54) **EPOXY RESIN COMPOSITION, CURED RESIN, PREPREG AND FIBER-REINFORCED COMPOSITE MATERIAL**

EPOXIDHARZZUSAMMENSETZUNG, GEHÄRTETES HARZ, PREPREG UND FASERVERSTÄRKTER VERBUNDSTOFF

COMPOSITION DE RÉSINE ÉPOXY, RÉSINE DURCIE, PRÉ-IMPRÉGNÉ ET MATÉRIAU COMPOSITE RENFORCÉ PAR FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2014 JP 2014219935**

(43) Date of publication of application:
**06.09.2017 Bulletin 2017/36**

(73) Proprietor: **Toray Industries, Inc.**
**Tokyo 103-8666 (JP)**

(72) Inventors:
- **FUSE, Ayako**
  **Nagoya-shi**
  **Aichi 455-8502 (JP)**
- **TOMIOKA, Nobuyuki**
  **Nagoya-shi**
  **Aichi 455-8502 (JP)**
- **KOYANAGI, Shizue**
  **Iyo-gun**
  **Ehime 791-3193 (JP)**
- **ARAI, Nobuyuki**
  **Iyo-gun**
  **Ehime 791-3193 (JP)**
- **HONDA, Shirou**
  **Nagoya-shi**
  **Aichi 455-8502 (JP)**

(74) Representative: **Mewburn Ellis LLP**
**City Tower**
**40 Basinghall Street**
**London EC2V 5DE (GB)**

(56) References cited:
**WO-A1-2005/083002 WO-A1-2013/099862**
**WO-A1-2014/112180 WO-A1-2015/005411**
**JP-A- 2007 314 753**

- **MILOS NETOPILÍK ET AL: "Number-average molecular weight of branched polymers from SEC with viscosity detection and universal calibration", POLYMER INTERNATIONAL, vol. 57, no. 10, 1 October 2008 (2008-10-01), pages 1152-1158, XP055481706, GB ISSN: 0959-8103, DOI: 10.1002/pi.2458**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to fiber reinforced composite material suitable for aerospace applications, cured resin and prepreg for the production thereof, and epoxy resin compositions preferred as matrix resin thereof.

### Background Art

High in specific strength and specific modulus, fiber reinforced composite materials containing reinforcement fiber such as carbon fiber and aramid fiber have recently been used widely for manufacturing structural materials for aircraft and automobiles, sporting goods such as tennis rackets, golf shafts, and fishing poles, as well as general industrial applications. Fiber reinforced composite materials are manufactured by, for example, stacking a plurality of layers of prepreg, that is, sheet-like intermediate material prepared by impregnating reinforcement fiber with uncured matrix resin, followed by curing them by heating, or injecting liquid resin into reinforcement fiber placed in a mold, followed by curing the resin by heating, which is called the resin transfer molding method.

Of these production methods, the use of prepreg has the advantage of enabling easy production of high performance fiber reinforced composite material because the orientation of the reinforcement fiber can be controlled accurately and also because a high degree of design freedom is ensured for the stack structure. As the matrix resin of such prepreg, thermosetting resins are mainly used from the viewpoint of heat resistance and productivity and in particular, epoxy resin is preferred from the viewpoint of mechanical characteristics such as adhesion between resin and reinforcement fiber, their dimensional stability, and the strength and rigidity of composite materials produced from them.

Among others, amine type epoxy resins, which can form cured materials with a small epoxy equivalent and a high crosslink density, have been adopted favorably as matrix resin of reinforcement fibers that are used for producing fiber reinforced composite materials for aerospace applications in which high strength characteristics and durable stability are required. Although they have made it possible to design resins with high elastic modulus and high heat resistance, such resins tend to form cured materials with low deformability and low ductility.

To solve the problems with the low ductility of the amine type epoxy resin, some attempts have been made including blending it with thermoplastic resin with high ductility to form a phase separated structure with epoxy resin. However, such methods tend to have problems such as a decline in elastic modulus, heat resistance, etc., deterioration in processability due to increased viscosity, and deterioration in quality due to generation of voids.

To prevent such increase in viscosity of resin composition, a design method aiming to increase the ductility by blending polysulfone with a low number average molecular weight was developed (Patent document 1). Specifically, it has been disclosed that a large ductility improving effect can be achieved by adding polysulfone with a number average molecular weight of 3,000 to 5,100 in large amounts, namely to 20 to 50 mass%, to an epoxy resin composition.

It has also been disclosed that heat resistance and elastic modulus can be improved by using an epoxy resin containing two or more ring structures, each having four or more members, and at least one amine type glycidyl group connected directly to these ring structures (Patent document 2).

### Prior Art Documents

#### Patent Documents

Patent document 1: Japanese Unexamined Patent Publication No. SHO 61-228016
Patent document 2: International Publication WO 2010/109929

WO 2014/112180 describes an epoxy resin composition; a prepreg; and a carbon-fiber-reinforced composite material. The epoxy resin composition comprises at least [A] an epoxy resin having a structure represented by formula (1), [B] an epoxy resin having at least one amine-type glycidyl group or at least one ether-type glycidyl group and having a liquid form at 40°C and [C] a curing agent.

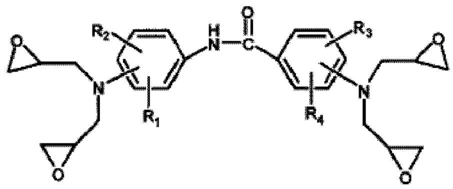

(1)

In formula (1), $R_1$ to $R_4$ independently represent at least one atom or group selected from the group consisting of a hydrogen atom, an aliphatic hydrocarbon group having 1 to 4 carbon atoms, an alicyclic hydrocarbon group having 4 or less carbon atoms, and a halogen atom.

WO 2015/005411 describes an epoxy resin composition comprising at least [A] a curing agent represented by formula (1) and [B] an aromatic epoxy resin having three or more functionalities, wherein the relaxation time ($T_1{}^C$) of a carbon nucleus corresponding to a benzene ring carbon atom in the main skeleton represented by formula (1) which is attributed to 130 ppm in solid 13C-NMR spectra is 42 seconds or longer; a prepreg produced using the epoxy resin; and a carbon fiber-reinforced composite material.

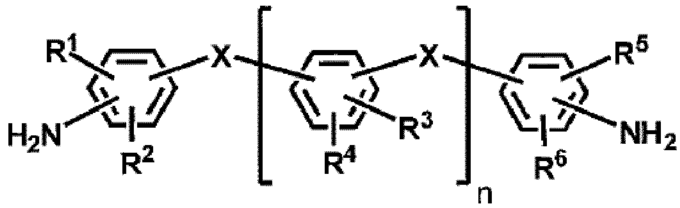

(1)

In formula (1), X represents at least one group selected from $-CH_2-$, -O-, -CO-, -C(=O)O-, -S-, $-SO_2-$ and -NHC(=O)-, n represents an integer of 1 to 5, and R1 to R6 independently represent at least one selected from the group consisting of a hydrogen atom, an aliphatic hydrocarbon group having 1 to 4 carbon atoms, an alicyclic hydrocarbon group having 4 or less carbon atoms and a halogen atom, wherein when X in the formula represents -C(=O)O- or -NHC(=O)-, X may be directed in either direction.

Summary of the Invention

Problems to be Solved by the Invention

The method disclosed in Patent document 1, however, cannot achieve sufficiently high heat resistance and resin elongation percentage to meet the characteristics required in fiber reinforced composite materials for aerospace applications.

The method disclosed in Patent document 2 also fails to provide cured resin with sufficiently high elongation percentage or fiber reinforced composite material with sufficiently high interlayer ductility.

Thus, it has been difficult to develop an epoxy resin composition that has a required level of elongation percentage, heat resistance, ductility, and elastic modulus.

Accordingly, an object of the present invention is to provide an epoxy resin composition having an improved resin elongation percentage and heat resistance. In addition, another object is to make use of such an epoxy resin composition to provide a fiber reinforced composite material having high interlayer ductility and high compression strength in a high temperature environment.

Means of Solving the Problems

As a result of studies for solving the problem, the inventors have identified an epoxy resin composition having a structure as described below and arrived at the present invention. Specifically, the present invention has the constitution described below.

An epoxy resin composition according to claim 1.

For the present invention, furthermore, the aforementioned epoxy resin composition can be cured to produce cured resin; the aforementioned epoxy resin composition can serve to impregnate reinforcement fiber to produce prepreg; fiber reinforced composite material containing the aforementioned cured resin and reinforcement fiber can be produced;

and the prepreg can be cured to produce fiber reinforced composite material.

Advantageous Effect of the Invention

The present invention serves to provide an epoxy resin composition having an improved resin elongation percentage and heat resistance. In addition, it also makes use of such an epoxy resin composition to provide a fiber reinforced composite material having high interlayer ductility and high compression strength in a high temperature environment.

Description of Preferred Embodiments

Described in detail below are the epoxy resin composition, cured resin, prepreg, and fiber reinforced composite material according to the present invention.

The epoxy resin composition according to the present invention includes an amine type epoxy resin [A], an thermoplastic resin [B], and an aromatic amine [C], [B] accounting for 8 to 40 mass% of the epoxy resin composition, the number of moles of the active hydrogen contained in [C] being 1.05 to 2.0 times as large as the number of moles of the epoxy groups contained in the entire epoxy resin composition, [A], [B], and [C] forming a single phase structure or a below-500-nm phase separated structure in cured material with a cure degree of 90% or more as determined by DSC (differential scanning calorimetry) produced by curing the epoxy resin composition, and the glass transition temperature X (°C) and the rubber state elastic modulus Y (MPa) of the cured material as determined by DMA (dynamic mechanical analysis) meeting the Equation (1) given below:

$$0.19X/°C - 31.5 \leqq Y/MPa \leqq 0.19X/°C - 27 \qquad (1)$$

Such cured material as referred to for the present invention that is produced by curing an epoxy resin composition and has a DSC cure degree of 90% or more is one with a cure degree of 90% or more as calculated by the equation given below from the total calorific value QT of the epoxy resin composition determined by DSC (differential scanning calorimetry) and the residual calorific value QR of the cured material.

$$\text{Cure degree (\%)} = (QT-QR) / QT \times 100$$

For the present invention, the parameters X and Y in Equation (1) are associated with cured material prepared by heating and curing the epoxy resin composition according to the present invention under temperature conditions where the cure degree as determined by DSC is to be 90% or more and calculated from a scatter diagram in terms of storage elastic modulus and temperature that is constructed based on temperature rising measurements by DMA (dynamic mechanical analysis). The glass transition temperature is the temperature where the tangent drawn in the glass region and the tangent drawn in the glass transition region intersect each other in the scatter diagram. The rubber state elastic modulus is the storage elastic modulus at a temperature 50°C higher than the glass transition temperature.

Fiber reinforced composite material produced from the epoxy resin composition according to the present invention should form cured epoxy resin material that has a relation between the glass transition temperature and the rubber state elastic modulus as shown by the equation $0.19X/°C - 31.5 \leqq Y/MPa \leqq 0.19X/°C - 27$, preferably $0.19X/°C - 31.5 \leqq Y/MPa \leqq 0.19X/°C - 28$. A desired heat resistance and elongation percentage can be achieved simultaneously if the glass transition temperature and the rubber state elastic modulus are in this range.

If the epoxy resin composition has a rubber state elastic modulus higher than 0.19X/°C - 27, the rubber state elastic modulus is so high that the plastic deformability will decline and that the fiber reinforced composite material will be poor in interlayer ductility. If it is smaller than 0.19X/°C - 31.5, on the other hand, the rubber state elastic modulus is so low that the cured epoxy resin material will fail to have sufficient elastic modulus, possibly leading to fiber reinforced composite material lacking in compression strength at high temperatures.

The substances that can work as the amine type epoxy resin [A] for the present invention include, for example, tetraglycidyl diaminodiphenyl methane, tetraglycidyl diaminodiphenyl sulfone, tetraglycidyl xylylene diamine, triglycidyl aminophenol, triglycidyl aminocresol,diglycidyl aniline, diglycidyl toluidine, halogen substitutes thereof, alkyl substitutes thereof, and hydrogenated products thereof. In particular, tetraglycidyl diaminodiphenyl methane, triglycidyl aminophenol, halogen substitutes thereof, alkyl substitutes thereof, and hydrogenated products thereof are preferred because they serve to increase the elastic modulus and heat resistance.

Usable commercial products of tetraglycidyl diaminodiphenyl methane include Sumiepoxy (registered trademark) ELM434 (manufactured by Sumitomo Chemical Co., Ltd.), YH434L (manufactured by Nippon Steel & Sumikin Chemical Co., Ltd.), jER (registered trademark) 604 (manufactured by Mitsubishi Chemical Corporation), and Araldite (registered trademark) MY720, Araldite (registered trademark) MY721, Araldite (registered trademark) MY9512, and Araldite (registered trademark) MY9663 (all manufactured by Huntsman Advanced Materials Gmbh).

Commercially available products of tetraglycidyl diaminodiphenyl sulfone include TG3DAS (manufactured by Mitsui Fine Chemical, Inc.).

Usable commercial products of tetraglycidyl xylylene diamines and hydrogenated products thereof include TETRAD (registered trademark) -X and TETRAD (registered trademark) -C (both manufactured by Mitsubishi Gas Chemical Co., Inc.).

Useful commercial products of triglycidyl aminophenol and triglycidyl aminocresol include SUMI-EPOXY (registered trademark) ELM100, SUMI-EPOXY (registered trademark) ELM120 (both manufactured by Sumitomo Chemical Co., Ltd.), Araldite (registered trademark) MY0500, Araldite (registered trademark) MY0510, and Araldite (registered trademark) MY0600 (all manufactured by Huntsman Advanced Materials Gmbh), and jER (registered trademark) 630 (manufactured by Mitsubishi Chemical Corporation).

Commercially available products of diglycidyl aniline include GAN (manufactured by Nippon Kayaku Co., Ltd.) and PxGAN (manufactured by Toray Fine Chemicals Co., Ltd.).

Commercially available products of diglycidyl toluidine include GOT (manufactured by Nippon Kayaku Co., Ltd.).

For the present invention, amine type epoxy resin [A] preferably accounts for 50 to 100 parts by mass, more preferably 70 to 100 parts by mass, in the total quantity, or 100 parts by mass, of the epoxy resin. If the amine type epoxy resin accounts only for less than 50 parts by mass relative to the total quantity, or 100 parts by mass, of the epoxy resin, it may lead to an epoxy resin composition that lacks in heat resistance and elastic modulus. Furthermore, it may result in fiber reinforced composite material with a decreased compression strength.

For the epoxy resin composition according to the present invention, the amine type epoxy resin [A] preferably contains a bifunctional amine type epoxy resin and a tri- or more functional amine type epoxy resin. The existence of a bifunctional amine type epoxy resin serves to increase the distances between crosslinking points, leading to an increase in elongation percentage. Furthermore, the existence of a tri- or more functional amine type epoxy resin serves to improve the heat resistance and elastic modulus, leading to a well-balanced resin composition.

The epoxy resin may contain other epoxy resin components other than the amine type epoxy resin [A] unless it impairs the advantageous effect of the invention. Such components may be used singly or as a combination of a plurality thereof. Specifically, they include phenol novolac type epoxy resin, cresol novolac type epoxy resin, resorcinol type epoxy resin, dicyclopentadiene type epoxy resin, urethane- or isocyanate-modified epoxy resin, epoxy resin with a biphenyl backbone, epoxy resin with a fluorene backbone, and bisphenol type epoxy resin such as bisphenol A type, bisphenol F type, bisphenol S type, and bisphenol AD type, as well as halogen substitutes, alkyl substitutes, and hydrogenated products of these bisphenols. Specific examples of such epoxy resin include the following.

Commercial products of phenol novolac type epoxy resin include jER (registered trademark) 152, jER (registered trademark) 154 (both manufactured by Mitsubishi Chemical Corporation), EPICLON(registered trademark) N-740, EPICLON (registered trademark) N-770, and EPICLON (registered trademark) N-775 (all manufactured by DIC).

Commercial products of cresol novolac type epoxy resin include EPICLON (registered trademark) N-660, EPICLON (registered trademark) N-665, EPICLON (registered trademark) N-670, EPICLON (registered trademark) N-673, and EPICLON (registered trademark) N-695 (all manufactured by DIC), and EOCN-1020, EOCN-102S, and EOCN-104S (all manufactured by Nippon Kayaku Co., Ltd.).

Specifically, commercial products of resorcinol type epoxy resin include DENACOL (registered trademark) EX-201 (manufactured by Nagase ChemteX Corporation).

Commercial products of dicyclopentadiene type epoxy resin include EPICLON (registered trademark) HP7200, EPICLON (registered trademark) HP7200L, and EPICLON (registered trademark) HP7200H (all manufactured by DIC), Tactix 558 (manufactured by Huntsman Advanced Materials Gmbh), XD-1000-1L, and XD-1000-2L (all manufactured by Nippon Kayaku Co., Ltd.).

Commercial products of urethane- or isocyanate-modified epoxy resin include AER4152 (manufactured by Asahi Kasei E-materials Corporation) and ACR1348 (manufactured by Asahi Denka Co. Ltd.), which have an oxazolidone ring.

Commercial products of epoxy resin with a biphenyl backbone include jER (registered trademark) YX4000H, jER (registered trademark) YX4000, and jER (registered trademark) YL6616 (all manufactured by Mitsubishi Chemical Corporation), and NC-3000 (manufactured by Nippon Kayaku Co., Ltd.).

Commercial products of epoxy resin with a fluorene backbone include ESF300 (manufactured by Nippon Steel & Sumikin Chemical Co., Ltd.), ONCOAT (registered trademark) EX-1010, ONCOAT (registered trademark) EX-1011, ONCOAT (registered trademark) EX-1012, ONCOAT (registered trademark) EX-1020, ONCOAT (registered trademark) EX-1030, ONCOAT (registered trademark) EX-1040, ONCOAT (registered trademark) EX-1050, and ONCOAT (registered trademark) EX-1051 (all manufactured by Nagase ChemteX Corporation).

Commercial products of bisphenol A type epoxy resin include EPOTOHTO (registered trademark) YD128 (manufactured by Nippon Steel & Sumikin Chemical Co., Ltd.), jER (registered trademark) 825, jER (registered trademark) 828, jER (registered trademark) 834, jER (registered trademark) 1001, jER (registered trademark) 1004, jER (registered trademark) 1007, jER (registered trademark) 1009, and jER (registered trademark) 1010 (all manufactured by Mitsubishi Chemical Corporation).

Commercial products of bisphenol F type epoxy resin include EPICLON (registered trademark) 830, EPICLON (registered trademark) 835 (both manufactured by DIC), jER (registered trademark) 806, jER (registered trademark) 807, jER (registered trademark) 4004P, jER (registered trademark) 4007P, jER (registered trademark) 4009P, jER (registered trademark) 4010P (all manufactured by Mitsubishi Chemical Corporation), EPOTOHTO (registered trademark) YDF170, and EPOTOHTO (registered trademark) YDF2001 (both manufactured by Nippon Steel & Sumikin Chemical Co., Ltd.).

Commercial products of bisphenol S type epoxy resin include EPICLON (registered trademark) EXA-1514 (manufactured by DIC).

Commercial products of bisphenol AD type epoxy resin include EPOMIK (registered trademark) R710 and EPOMIK (registered trademark) R1710 (both manufactured by Printec, Inc.).

For the epoxy resin composition according to the present invention, the thermoplastic resin [B] is added by mixing or dissolution.

For the present invention, the amine type epoxy resin [A] is used in combination with the thermoplastic resin [B] in order to ensure high ductility while avoiding a decrease in heat resistance, leading to fiber reinforced composite material with largely improved interlayer ductility.

The thermoplastic resin [B] according to the present invention is a polymer material that is in a crystal state or in a glass state at room temperature and has thermoplasticity.

In general, this thermoplastic resin [B] is preferably one in which the backbone chain contains a bond selected from the group consisting of carbon-carbon bond, amide bond, imide bond, ester bond, ether bond, carbonate bond, urethane bond, thioether bond, sulfone bond, and carbonyl bond. This thermoplastic resin [B], furthermore, may partially contain a crosslinked structure and may be either crystalline or amorphous. It is particularly preferable that at least one resin selected from the group consisting of polyamide, polycarbonate, polyacetal, polyphenylene oxide, polyphenylene sulfide, polyallylate, polyester, polyamide-imide, polyimide, polyetherimide, polyimide having a phenyl trimethyl indane structure, polysulfone, polyethersulfone, polyether ketone, polyether ether ketone, polyaramid, polyether nitrile, and polybenzimidazole, is dissolved in any epoxy resin component contained in the above epoxy resin composition.

For the present invention, the thermoplastic resin [B] accounts for 12 to 35 mass%, preferably 16 to 35 mass%, and more preferably 20 to 30 mass%, in the epoxy resin composition.

The content of the thermoplastic resin [B] described above refers to the proportion relative to 100 mass% of the epoxy resin composition, but in the case where thermoplastic resin particles [D] are added as described later, the weight of the thermoplastic resin particles [D] is excluded from the total weight of the epoxy resin composition when calculating the content.

If the content of the thermoplastic resin [B] is less than 8 mass%, it will lead to cured resin with decreased ductility and the resulting fiber reinforced composite material will be poor in interlayer ductility. If it is more than 40 mass%, on the other hand, the thermosetting resin composition will suffer from an increase in viscosity, leading to a thermosetting resin composition and prepreg with insufficient production processability and handleability.

This thermoplastic resin [B] preferably has a weight average molecular weight in the range of 4,000 to 40,000 g/mol, more preferably 10,000 to 40,000 g/mol, and still more preferably 15,000 to 30,000 g/mol. If the weight average molecular weight is less than 4,000 g/mol, it may lead to cured epoxy resin material that lacks in elongation percentage and ductility. If it is more than 40,000 g/mol, on the other hand, the epoxy resin will be high in viscosity and difficult to knead when the thermoplastic resin is dissolved in the epoxy resin composition, possibly leading to difficulty in prepreg production.

Furthermore, the thermoplastic resin [B] according to the present invention preferably has a glass transition temperature of 150°C or more, more preferably 200°C or more, and still more preferably 220°C or more. If the thermoplastic resin [B] has a glass transition temperature of less than 150°C, it may lead to a molded product that can suffer from heat deformation easily.

Substances that can serve as the thermoplastic resin [B] include polycarbonate (glass transition temperature (occasionally referred to as Tg) of 150°C), polysulfone (Tg: 190°C), polyether imide (Tg: 215°C), and polyether sulfone (Tg: 225°C).

The glass transition temperature of the thermoplastic resin [B] is determined by using DSC (differential scanning calorimetry) as follows: a specimen is heated at a heating rate of 20°C/min from 30°C to a temperature 30°C or more higher than an expected glass transition temperature, maintained at the temperature for 1 min, once cooled at a cooling rate of 20°C/min down to 0°C, maintained at the temperature for 1 min, and then heated again at a heating rate of 20°C/min while observing the glass transition temperature (Tg).

Commercial products of polycarbonate include Panlite (registered trademark) K1300Y (manufactured by Teijin Limited).

Commercial products of polysulfone include Udel (registered trademark) P-1700, Udel (registered trademark) P-3500LCD, and Virantage (registered trademark) DAMS VW-30500RP (all manufactured by Solvay Specialty Polymers).

Commercial products of polyetherimide include ULTEM (registered trademark) 1000 and ULTEM (registered trademark) 1010 (both manufactured by SABIC).

Commercial products of polyether sulfone include SUMIKAEXCEL (registered trademark) PES3600P, SUMIKAEXCEL (registered trademark) PES5003P, SUMIKAEXCEL (registered trademark) PES5200P, SUMIKAEXCEL (registered trademark) PES7600P (all manufactured by Sumitomo Chemical Co., Ltd.), Ultrason (registered trademark) E2020P SR (manufactured by BASF), GAFONE (registered trademark) 3600R, GAFONE (registered trademark) 3000R, and Virantage (registered trademark) VW-10700RP (all manufactured by Solvay Speciality Polymers).

Furthermore, the terminal functional group in the thermoplastic resin [B] is preferably the hydroxyl group, carboxyl group, amino group, thiol group, or an anhydride. Thermoplastic resins having a hydroxyl group include polyvinyl alcohol and phenoxy resins as well as polyvinyl acetal resins such as polyvinyl formal and polyvinyl butyral. Thermoplastic resins having a sulfonyl group include polyether sulfone.

Specifically, commercial products of phenoxy resin include PHENOTOHTO (registered trademark) YP-50 and PHENOTOHTO (registered trademark) YP-50S (both manufactured by Nippon Steel & Sumikin Chemical Co., Ltd.).

For the present invention, furthermore, it is also preferable to add thermoplastic resin particles [D] that are insoluble in the epoxy resin. The addition of such thermoplastic resin particles [D] leads to fiber reinforced composite material with improved interlayer ductility.

Useful materials for such thermoplastic resin particles [D] include thermoplastic resins that do not melt in the epoxy resin. Examples include polyamide, polyimide, polyamideimide, polycarbonate, and polyphenylene sulfide. In particular, polyamide is the most preferable, and preferable polyamide compounds include nylon 12, nylon 6, nylon 11, nylon 6/12 copolymers, Grilamide (registered trademark) TR-55, Grilamide (registered trademark) TR-90, Grilamide (registered trademark) TR-70LX (all manufactured by Emser Werke, Inc.), and other transparent, heat resistant polyamide compounds. In regard to the shape of the thermoplastic resin particles [D], they may be spherical particles, non-spherical particles, or porous particles, of which spherical particles are preferable because they ensure high viscoelasticity by preventing reduction in the flow characteristics of the resin and also ensure high impact resistance by eliminating potential starting points of stress concentrations.

Commercial products of polyamide particles include SP-500, SP-10 (both manufactured by Toray Industries, Inc.), Orgasol (registered trademark) 1002D, Orgasol (registered trademark) 2002, Orgasol (registered trademark) 3202 (all manufactured by ATOCHEM), and Trogamid (registered trademark) T5000 (manufactured by Daicel-Evonik Ltd.).

For the present invention, the aromatic amine [C] is a curing agent for the epoxy resin contained in the epoxy resin composition according to the present invention, and it is a compound containing active hydrogen that can react with the epoxy group.

Specific examples include diaminodiphenyl sulfone, diaminodiphenyl methane, diaminodiphenyl ether, bisaniline, and diaminobenzanilide.

In particular, diaminodiphenyl sulfone and isomers thereof are used. Diaminodiphenyl sulfone and isomers thereof are used because they serve to produce cured epoxy resin material with high heat resistance.

Such isomers of diaminodiphenyl sulfone include 3,3'-diaminodiphenyl sulfone and 4,4'-diaminodiphenyl sulfone.

Here, the total quantity of such aromatic amine [C] should be such that the number of moles of active hydrogen contained in [C] is 1.2 to 1.5 times, as large as the number of moles of epoxy groups contained in the entire epoxy resin composition. If the number of moles of such active hydrogen is only less than 1.05 times as large as the number of moles of epoxy groups contained in the entire epoxy resin composition, the crosslink density will increase to decrease the resin's elongation percentage and in addition, the phase separation structure will become coarse, possibly leading to fiber reinforced composite material with insufficient interlayer ductility and compression strength. If it is more than 2.0 times, on the other hand, the heat resistance will decrease significantly while the viscosity of the epoxy resin composition will increase, making prepreg preparation difficult.

Commercial products of the aromatic amine [C] include SEIKACURE S (manufactured by Wakayama Seika Kogyo Co., Ltd.), MDA-220 (manufactured by Mitsui Chemicals, Inc.), jER Cure (registered trademark) W (manufactured by Mitsubishi Chemical Corporation), 3,3'-DAS (manufactured by Mitsui Fine Chemicals, Inc.), Lonzacure (registered trademark) M-DEA, Lonzacure (registered trademark) M-DIPA, Lonzacure (registered trademark) M-MIPA, and Lonzacure (registered trademark) DETDA80 (all manufactured by Lonza).

These materials for the aromatic amine [C] may be used singly, or a plurality thereof may be used in combination. The composition to be used may contain epoxy resin and the aromatic amine [C], part of which may be subjected to a preliminary reaction in advance. In some cases, this method can serve effectively for viscosity adjustment and storage

stability improvement.

For the epoxy resin composition according to the present invention, it is preferable that the constituents (components) other than the aromatic amine [C] be first heated and kneaded uniformly at a temperature of about 160°C and cooled to a temperature of about 80°C, followed by adding the aromatic amine [C] and further kneading, although methods to be used to mix the components are not limited to this.

The cured epoxy resin material according to the present invention can be obtained by heating and curing the epoxy resin composition according to the present invention under temperature conditions where the cure degree as determined by DSC is to be 90% or more. Such temperature conditions may be adjusted appropriately to suite the type and quantity of the curing agent and accelerator used, and in the case where diaminodiphenyl sulfone is used as curing agent, for example, the temperature condition of 180°C for 2 hours can work favorably.

In the cured epoxy resin material according to the present invention, the amine type epoxy resin [A], the thermoplastic resin [B], and the aromatic amine [C] should form a single phase structure or a fine, below-500-nm phase separated structure.

A phase separated structure as referred to for the present invention is one in which a plurality of phases form a 10 nm or more phase separated structure. Compared to this, a single phase structure is one in which the components are mixed uniformly at the molecular level. For the present invention, a phase separated structure composed of a plurality of phases of less than 10 nm is assumed to be a single phase structure because it is difficult to identify each phase by transmission electron microscopy.

The cured epoxy resin material according to the present invention should be such that the amine type epoxy resin [A] and the aromatic amine [C] coexist after being crosslinked through a curing reaction to form a phase in which the thermoplastic resin [B] is present in a compatible manner at the molecule level or forms a below-500-nm phase separated structure.

Having reactivity with the amine type epoxy resin [A] and the aromatic amine [C], the thermoplastic resin [B] is favored because it can form a stable single phase structure or a below-500-nm phase separated structure after being incorporated during curing reaction in the crosslinked structure formed of the amine type epoxy resin [A] and the aromatic amine [C]. Here, if the thermoplastic resin [B] is not contained, a single phase structure can form more easily, but the resulting cured material will have a largely decreased ductility. To ensure a sufficiently high ductility and maintain heat resistance to achieve a good balance among resin characteristics, it is necessary to form a single phase structure or a below-500-nm fine phase separated structure in the presence of the thermoplastic resin [B].

To confirm the existence of such a phase separated structure in the cured epoxy resin material, that is, to confirm the existence of a single phase structure or a below-500-nm fine phase separated structure formed of the amine type epoxy resin [A], the thermoplastic resin [B], and the aromatic amine [C] in cured material that is produced by curing an epoxy resin composition and has a cure degree of 90% or more as determined by DSC, a good method is to perform direct observation using any of various microscopes such as transmission electron microscope. That is to say, the decision on whether the structure formed is a single phase structure or a below-500-nm phase separated structure can be made based on photographs taken by an appropriate microscope.

This size of a phase separated structure is defined as follows. Here, such a phase separated structure may be either a continuous two-phase structure or a sea-island structure, and a separate definition is made for each of them. First, an image that shows the phase structure is taken by an appropriate microscope. In the case of a continuous two-phase structure, five arbitrary straight lines are drawn on the image, and the intersections between the straight lines and the phase interfaces are identified. For each of the lines, 20 pairs of adjacent intersections are selected and the distances between them are measured, followed by calculating the number average of the total of 100 measurements and adopting it as the size of the phase separated structure. For a sea-island structure, 100 island phase regions are selected arbitrarily in the area contained in the image and the number average of the diameters of the island phase regions is adopted as the size of the phase separated structure. For an elliptic or irregular shaped island phase region, the diameter of its circumscribed circle is used.

If a transmission electron microscope or a scanning electron microscope is used here, the specimen may be dyed with osmium as required.

Such a phase separated structure has either a single phase structure or a size below 500 nm, preferably either a single phase structure or a size below 300 nm, and more preferably a single phase structure. If the phase separated structure has a size of 500 nm or more, the resulting products of fiber reinforced composite material will be likely to vary in characteristics among molding batches or among parts of the molded products or fail to have sufficiently high interlayer ductility.

Different types of reinforcement fiber can serve for the present invention, and they include glass fiber, carbon fiber, graphite fiber, aramid fiber, boron fiber, alumina fiber, and silicon carbide fiber. Two or more of these types of reinforcement fiber may be used in combination, but the use of carbon fiber and graphite fiber is preferred to provide lightweight moldings with high durability. With a high specific modulus and specific strength, carbon fiber is used favorably, particularly when it is necessary to produce lightweight or high-strength material.

In respect to carbon fiber used favorably for the present invention, virtually any appropriate type of carbon fiber can be adopted for varied uses, but it is preferable for the carbon fiber to be used to have a tensile modulus not more than 400 GPa from the viewpoint of impact resistance. From the viewpoint of strength, carbon fiber with a tensile strength of 4.4 to 6.5 GPa is used preferably because composite material with high rigidity and mechanical strength can be produced. Tensile elongation is also an important factor, and it is preferable for the carbon fiber to have a high strength and a high elongation percentage of 1.7% to 2.3%. The most suitable carbon fiber will have various good characteristics simultaneously including a tensile modulus of at least 230 GPa, tensile strength of at least 4.4 GPa, and tensile elongation of at least 1.7%.

Commercial products of carbon fiber include TORAYCA (registered trademark) T800G-24K, TORAYCA (registered trademark) T800S-24K, TORAYCA (registered trademark) T700G-24K, TORAYCA (registered trademark) T300-3K, and TORAYCA (registered trademark) T700S-12K (all manufactured by Toray Industries, Inc.).

In regard to the form and way of alignment of carbon fibers, long fibers paralleled in one direction, woven fabric, or others may be selected appropriately, but if carbon fiber reinforced composite material that is lightweight and relatively highly durable is to be obtained, it is preferable to use carbon fibers in the form of long fibers (fiber bundles) paralleled in one direction, woven fabric, or other continuous fibers.

Carbon fiber bundles to be used for the present invention preferably have a monofilament fineness of 0.2 to 2.0 dtex, more preferably 0.4 to 1.8 dtex. If the monofilament fineness is less than 0.2 dtex, the carbon fiber bundles may be damaged easily due to contact with guide rollers during twining, and similar damage may take place during impregnation with the resin composition. If the monofilament fineness is more than 2.0 dtex, the resin composition may fail to impregnate carbon fiber bundles sufficiently, possibly resulting in a decrease in fatigue resistance.

The carbon fiber bundles to be used for the present invention preferably contain 2,500 to 50,000 filaments per fiber bundle. If the number of filaments is less than 2,500, the fibers may be easily caused to meander, leading to a decrease in strength. If the number of filaments is more than 50,000, resin impregnation may be difficult to perform during prepreg preparation or during molding. The number of filaments is more preferably in the range of 2,800 to 40000.

The prepreg according to the present invention is produced by impregnating the aforementioned reinforcement fiber with the aforementioned epoxy resin composition. In the prepreg, the mass fraction of fiber is preferably 40 to 90 mass%, more preferably 50 to 80 mass%. If the mass fraction of fiber is too small, the resulting composite material will be too heavy and the advantages of fiber reinforced composite material having high specific strength and specific modulus will be impaired in some cases, while if the mass fraction of fiber is too large, impregnation with the resin composition will not be achieved sufficiently and the resulting composite material will suffer from many voids, possibly leading to a large deterioration in mechanical characteristics.

There are no specific limitations on the shape of the reinforcement fiber, which may be, for example, in the form of long fibers paralleled in one direction, tow, woven fabric, mat, knit, or braid. For applications that require high specific strength and specific modulus, in particular, the most suitable is a unidirectionally paralleled arrangement of reinforcement fiber, but cloth-like (woven fabric) arrangement is also suitable for the present invention because of easy handling.

The prepreg according to the present invention can be produced by some different methods including a method in which the epoxy resin composition used as matrix resin is dissolved in a solvent such as methyl ethyl ketone and methanol to produce a solution with a decreased viscosity, and then used to impregnate reinforcement fiber (wet method), and a hot melt method in which the matrix resin is heated to decrease its viscosity and then used to impregnate reinforcement fiber (dry method).

The wet method includes the steps of immersing reinforcement fiber in a solution of epoxy resin composition, that is, matrix resin, pulling it out, and evaporating the solvent using an oven etc., whereas the hot melt method (dry method) includes the steps of heating an epoxy resin composition to reduce the low viscosity and directly impregnating the reinforcement fiber with it, or the steps of coating release paper or the like with the epoxy resin composition to prepare a film, attaching the film to cover either or both sides of a reinforcement fiber sheet, and pressing them under heat so that the reinforcement fiber is impregnated with the resin. The hot melt method is preferred for the present invention because the resulting prepreg will be substantially free of residual solvent.

The resulting prepreg sheets are stacked and the stack is heated under pressure to cure the matrix resin, thereby providing the fiber reinforced composite material according to the present invention.

Here, the application of heat and pressure is carried out by using an appropriate method such as press molding, autoclave molding, bagging molding, wrapping tape molding, and internal pressure molding.

The fiber reinforced composite material according to the present invention can be produced by a prepreg-free molding method in which reinforcement fiber is directly impregnated with the epoxy resin composition, followed by heating for curing, such as hand lay-up molding, filament winding, pultrusion, resin injection molding, and resin transfer molding. For these methods, it is preferable that two liquids, that is, a base resin formed of epoxy resin and an epoxy resin curing agent, are mixed immediately before use to prepare an epoxy resin composition.

Fiber reinforced composite material containing the epoxy resin composition according to the present invention

as matrix resin is used favorably for producing sports goods, aircraft members, and general industrial products. More specifically, their preferred applications in the aerospace industry include primary structural members of aircraft such as main wing, tail unit, and floor beam; secondary structural members such as flap, aileron, cowl, fairing, and other interior materials; and structural members of artificial satellites such as rocket motor case. Of these aerospace applications, primary structural members of aircraft, including body skin and main wing skin, that particularly require high impact resistance as well as high tensile strength at low temperatures to resist the coldness during a high-altitude flight represent particularly suitable applications of the fiber reinforced composite material according to the present invention. Their preferred applications for general industrial uses include structural members of vehicles such as automobiles, ships, and railroad vehicles; and civil engineering and construction materials such as drive shafts, plate springs, windmill blades, various turbines, pressure vessels, flywheels, rollers for paper manufacture, roofing materials, cables, reinforcing bars, and mending/reinforcing materials. Applications in the sporting goods industry include golf shafts, fishing poles, rackets for tennis, badminton, squash, etc., hockey sticks, and skiing poles.

## Examples

The epoxy resin composition according to the invention as well as a prepreg and a fiber reinforced composite material produced therefrom are described in detail below with reference to Examples. Described below are the resin materials used in Examples and the preparation and evaluation methods used for prepreg and fiber reinforced composite materials. Preparation and evaluation of prepreg in Examples were performed in an atmosphere at a temperature of 25°C±2°C and relative humidity of 50% unless otherwise specified.

[Carbon Fiber (Reinforcement Fiber)]

T ORAYCA (registered trademark) T800G-24K-31E (carbon fiber of 24,000 filaments, tensile strength of 5.9 GPa, tensile modulus of 294 GPa, tensile elongation of 2.0%, manufactured by Toray Industries, Inc.).

[Raw resin materials]

< Amine type epoxy resin [A] >

- SUMI-EPOXY (registered trademark) ELM434 (tetraglycidyl diaminodiphenyl methane, manufactured by Sumitomo Chemical Co., Ltd.)
- TG3DAS (tetraglycidyl- 3,3'-diaminodiphenyl sulfone, manufactured by Mitsui Fine Chemical, Inc.)
- Araldite (registered trademark) MY0510 (triglycidyl-p-aminophenol, manufactured by Huntsman Japan KK)
- Araldite (registered trademark) MY0600 (triglycidyl-m-aminophenol, manufactured by Huntsman Japan KK)
- GAN (N,N-diglycidyl aniline, manufactured by Nippon Kayaku Co., Ltd.)
- PxGAN (N,N-diglycidyl- 4-phenoxy aniline, manufactured by Toray Fine Chemicals Co., Ltd.)
- DENACOL(registered trademark) Ex-731 (N-glycidylphthalimide, manufactured by Nagase ChemteX Corporation)

< Epoxy resins other than [A] >

- EPON (registered trademark) 825 (bisphenol A type epoxy resin, manufactured by Momentive Specialty Chemicals)
- EPICLON (registered trademark) 830 (bisphenol F type epoxy resin, manufactured by DIC)

< Thermoplastic resin [B] >

- SUMIKAEXCEL (registered trademark) PES5003P (polyethersulfone, manufactured by Sumitomo Chemical Co., Ltd., weight average molecular weight: 47,000)
- Virantage (registered trademark) VW-10700RP (polyethersulfone, manufactured by Solvay Speciality Polymers, weight average molecular weight: 21,000)

- Virantage (registered trademark) VW-30500RP (polysulfone, manufactured by Solvay Speciality Polymers, weight average molecular weight: 14,000)
- PHENOTOHTO (registered trademark) YP-50 (phenoxy resin, manufactured by Nippon Steel & Sumikin Chemical Co., Ltd., weight average molecular weight: 60,000 to 80,000)

< Aromatic amine [C] >

- 3, 3'-DDS (3, 3'-diaminodiphenyl sulfone, manufactured by Mitsui Fine Chemical, Inc.)
- 4,4'-DDS (4,4'-diaminodiphenyl sulfone, manufactured by Wakayama Seika Kogyo Co., Ltd.)

< Curing agent other than [C] >

- DICY7 (dicyandiamide, manufactured by Mitsubishi Chemical Corporation)

< Thermoplastic resin particles [D] >

- Grilamide (registered trademark) TR-55 particles (prepared from Grilamide (registered trademark) TR55 as input material, particles with an average particle diameter of 13 μm)

(Preparation method for Grilamide (registered trademark) TR-55 particles)

First, 33 g of a transparent polyamide product (trade name: Grilamide (registered trademark) TR55, manufactured by Emser Werke, Inc.) was added to a mixed solvent of 100 g of chloroform and 35 g of methanol to provide a uniform solution. Then, using a spray gun designed for painting, the resulting solution was sprayed strongly against the liquid surface of 1,000 g of well-stirred n-hexane so as to separate out the solute. The precipitated solid was separated by filtration, washed well with n-hexane, and vacuum-dried at a temperature of 100°C for 24 hours to provide 28 g of white solid material. The resulting powder was observed by scanning electron microscopy and found to be particles of Grilamide (registered trademark) TR-55 with an average particle diameter of 13 μm.

- Orgasol (registered trademark) 1002D (manufactured by ATOCHEM, average particle diameter : 21.0 μm)

< Other components >

- DCMU99 (3-(3,4-dichlorophenyl)-1,1-dimethylurea, curing accelerator, manufactured by Hodogaya Chemical Co., Ltd.)

(1) Preparation of epoxy resin composition

In a kneader, required quantities of the amine type epoxy resin [A] or an epoxy resin other than [A] and the thermoplastic resin [B] were fed and heated to 160°C while kneading, followed by additional kneading at 160°C for 1 hour to produce a transparent viscous liquid. After cooling to 80°C while kneading, required quantities of the aromatic amine [C] or a curing agent other than [C], the thermoplastic resin particles [D], and other components were added and kneaded further to produce an epoxy resin composition.

(2) Measurement of DSC cure degree of cured resin

From the epoxy resin composition prepared in paragraph (1) above, a 5 mg specimen was taken and subjected to DSC measurement while heating the specimen from 30°C to 350°C at a heating rate of 10°C/min to provide an exotherm curve, followed by integrating the exothermic peak to calculate the gross calorific value QT of the epoxy resin composition.

The epoxy resin composition prepared in paragraph (1) above was deaerated in a vacuum and cured for 2 hours at a temperature of 180°C to provide cured resin material. From the resulting cured resin material, a 5 mg specimen was taken and subjected to DSC measurement while heating the sample from 30°C to 350°C at a heating rate of 10°C/min to provide an exotherm curve. If a residual exothermic peak exists, the exothermic peak is integrated to calculate the residual calorific value QR. If no residual exothermic peak exists, it was assumed that QR = 0.

Here, the cure degree (%) determined by DSC is calculated as follows:

$$\text{cure degree (\%)} = (QT-QR) / QT \times 100.$$

(3) Observation of phase structure in cured resin material

The epoxy resin composition prepared in paragraph (1) above was deaerated in a vacuum and cured for 2 hours at a temperature of 180°C to provide cured resin material. The cured resin was sliced into a thin section, and examined by transmission electron microscopy (TEM) under the following conditions to provide a transmission electron microscopic image. No dyeing agent was used.

- Equipment: H-7100 transmission electron microscope (manufactured by Hitachi, Ltd.)
- Accelerating voltage: 100 kV
- Magnification: 10,000 times

The transmission electron microscopic image obtained was examined to determine whether there was a phase separated structure with a size in the range from several tens of nanometers to several tens of micrometers. Here, any structure formed of the thermoplastic resin particles [D] insoluble in the epoxy resin was not regarded as such a phase structure, and observation was performed only for phase separated structures attributable to the epoxy resin composition excluding the thermoplastic resin particles [D]. To determine whether or not a dispersed phase found was attributable to the thermoplastic resin particles [D], the thermoplastic resin particles [D] in the epoxy resin composition were observed by scanning electron microscopy and compared in terms of size and morphology.

Phase separated structures in cured resin material can be in the form of a continuous two-phase structure or a sea-island structure and accordingly, their measurements were made as follows. In Tables 1 and 2, the size of the phase separated structures in cured resin material is shown in the column of "Phase structure (nm)". When a single phase structure is found, it is indicated as "single phase".

First, an image that shows a phase structure is taken by transmission electron microscopy. In the case of a continuous two-phase structure, five arbitrary straight lines were drawn on the image, and the adjacent intersections between the straight lines and the phase interfaces were identified. For each of the lines, 20 pairs of adjacent intersections were selected and the distances between them were measured, followed by calculating the number average of the total of 100 measurements and adopting it as the size of the phase separated structure. For a sea-island structure, 100 island phase regions were selected arbitrarily in the area contained in the image and the number average of the diameters of the island phase regions was adopted as the size of the phase separated structure. For an elliptic or irregular shaped island phase region, the diameter of its circumscribed circle was used.

(4) Measurement of bending deflection of cured resin material

The epoxy resin composition prepared in paragraph (1) above was deaerated in a vacuum and injected in a mold which was set up so that the thickness would be 2 mm. Curing was performed at a temperature of 180°C for 2 hours to provide cured resin with a thickness of 2 mm. Then, the resulting cured resin plate was cut to prepare a test piece with a width of 10 mm and length of 60 mm, and it was subjected to three-point bending test with a span of 32 mm, followed by determining the bending deflection, which represents the resin elongation, according to JIS K7171-1994.

(5) Measurement of glass transition temperature and rubber state elastic modulus of cured resin material

From the cured resin material plate prepared in paragraph (4), a test piece with a width of 10 mm and a length of 40 mm was cut out and the test piece was set to the solid twisting jig in a dynamic viscoelasticity measuring apparatus (ARES, manufactured by TA Instruments) and subjected to measurement over the temperature range from 30°C to 300°C under the conditions of a heating rate of 5°C/min, a frequency of 1 Hz, and a strain of 0.1%. In doing so, the glass transition temperature was assumed to be the temperature where the tangent drawn in the glass region and the tangent drawn in the glass transition region intersect each other in the graph between storage elastic modulus and temperature

obtained above. The rubber state elastic modulus was assumed to be the storage elastic modulus at a temperature 50°C higher than the glass transition temperature in the graph between storage elastic modulus and temperature obtained above. Here, if there occurred a plurality of glass transition temperatures that were attributable to [A], [B], or [C] instead of the thermoplastic resin particles [D] insoluble in the epoxy resin, the lowest one was adopted as the glass transition temperature.

(6) Preparation of prepreg

The epoxy resin composition was spread over a piece of release paper with a knife coater to prepare a resin film. Then, carbon fibers of TORAYCA (registered trademark) T800G-24K-31E manufactured by Toray Industries, Inc. were paralleled in one direction to form a sheet, and two resin films were used to cover both sides of the carbon fiber sheet and pressed under heat to impregnate the carbon fiber sheet with the resin to provide a unidirectional prepreg sheet with a carbon fiber metsuke of 190 $g/m^2$ and a matrix resin mass fraction of 35.5%. Here, in cases where an epoxy resin composition containing the thermoplastic resin particles [D] was used, two-step impregnation was carried out as described below to produce prepreg sheets in which the thermoplastic resin particles [D] were highly localized near the surface.

First, primary prepreg that was free of the thermoplastic resin particles [D] was prepared. Of the component materials listed in Tables 1 and 2, an epoxy resin composition free of the thermoplastic resin particles [D] was prepared by the procedure described in paragraph (1) above. This epoxy resin composition for primary prepreg was spread over a piece of release paper with a knife coater to provide a resin film for primary prepreg with a metsuke of 30 $g/m^2$, which corresponds to 60 mass% of the normal value. Then, carbon fibers of TORAYCA (registered trademark) T800G-24K-31E manufactured by Toray Industries, Inc. were paralleled in one direction to form a sheet, and two of the resin films for primary prepreg were used to cover both sides of the carbon fiber sheet and pressed under heat using heating rollers at a temperature of 100°C and an air pressure of 1 atm to impregnate the carbon fiber sheet with the resin to provide primary prepreg.

To prepare resin films for two-step impregnation, the procedure described in paragraph (1) above was carried out by using a kneader to produce an epoxy resin composition containing the thermoplastic resin particles [D] insoluble in epoxy resin, which is among the component materials listed in Tables 1 and 2, in a quantity 2.5 times the specified value. This epoxy resin composition for two-step impregnation was spread over a piece of release paper with a knife coater to provide a resin film for two-step impregnation with a metsuke of 20 $g/m^2$, which corresponds to 40 mass% of the normal value. Such films were used to sandwich a primary prepreg sheet and pressed under heat using heating rollers at a temperature of 80°C and an air pressure of 1 atm to provide a prepreg sheet in which the thermoplastic resin particles [D] were highly localized near the surface.

(7) Preparation of composite material plate for Mode-I interlaminar toughness ($G_{IC}$) test and implementation of Gic measurement

By the following procedure from (a) to (e), plates of composite material for $G_{IC}$ test were prepared according to JIS K7086 (1993).

(a) A total of 20 unidirectional prepreg plies as prepared in paragraph (6) were laminated together with the fibers aligned in one direction. A fluorine resin film with a width of 40 mm and a thickness of 12.5 μm was interposed at the center of the laminate (between the 10th ply and the 11th ply) in such a manner that its direction was perpendicular to the aligned fibers.
(b) The laminated prepreg plies were covered with a nylon film without leaving gaps, and molded in an autoclave under the conditions of 2 hours at a temperature of 180°C, a pressure of 0.59 MPa, and a heating rate of 1.5°C/min to form unidirectional fiber reinforced composite material.
(c) The unidirectional fiber reinforced composite material obtained in step (b) was cut to a width of 20 mm and a length of 195 mm. Cutting was performed so that the fibers were parallel to the length direction of the specimen.
(d) According to JIS K7086 (1993), a block (aluminum, length 25 mm) for pin load application was attached to an end (where the film was located) of the specimen.
(e) White paint was applied to both side faces of the specimen to ensure easy observation of the propagation of cracking.

The composite material plate prepared above was used to make $G_{IC}$ measurements by the following procedure.

Test was carried out using an Instron type universal tester (manufactured by Instron Corporation) according to Appendix 1 of JIS K7086 (1993). The crosshead speed was 0.5 mm/min before the length of the crack reached 20 mm and 1 mm/min after it reached 20 mm. According to JIS K7086 (1993), the Mode-I interlaminar fracture toughness ($G_{IG}$

at the initial point of cracking) that corresponds to the critical load at the initial point of cracking and the Mode-I interlaminar fracture toughness during progress of cracking were calculated from the load, displacement, and crack length. A $G_{IC}$ measurement at the initial point of cracking and five or more measurements made at crack lengths of 10 mm to 60 mm, that is, a total of six or more measurements, were averaged and used as $G_{IC}$ for comparison.

(8) Measurement of compression strength of fiber reinforced composite material

A total of 12 unidirectional prepreg plies prepared in paragraph (6) were laminated with their fibers aligned parallel to the compression direction, and the stack of prepreg plies was covered with a nylon film without leaving gaps and heated in an autoclave for 2 hours at a temperature of 180°C under the conditions of a pressure of 0.59 MPa and a heating rate of 1.5°C/min to provide a laminate body. From this laminate body, a tabbed specimen with a thickness of 2 mm, a width of 15 mm, and a length 78 mm was prepared. This specimen was subjected to 0° compression strength measurement using an Instron type universal tester according to JIS K7076 (1991). Five specimens were used (n = 5). Here, the compression strength in a high temperature environment was measured at a temperature of 140°C using an Instron type universal tester equipped with a temperature controlled bath.

(Example 1) (Example 1 is a Reference Example)

Using a kneading machine, 20 parts by mass of TG3DAS (amine type epoxy resin [A]) and 80 parts by mass of EPON (registered trademark) 825 (epoxy resin other than [A]) were kneaded, and then 21 parts by mass of SUMIKAEXCEL (registered trademark) PES5003P (thermoplastic resin [B]) was dissolved and kneaded at 160°C. After cooling the epoxy resin composition to 80°C, 69 parts by mass of 4,4'-DDS (aromatic amine [C]) and 28 parts by mass of Grilamide (registered trademark) TR-55 particles (thermoplastic resin particles [D]) were kneaded to provide an epoxy resin composition. Table 1 lists the components and proportions (figures in Table 1 are in parts by mass). Using the resulting epoxy resin composition, (2) measurement of DSC cure degree of cured resin, (3) observation of phase structure in cured resin material, (4) measurement of bending deflection of cured resin material, and (5) measurement of glass transition temperature and rubber state elastic modulus of cured resin material were performed. Then, prepreg was prepared from the resulting epoxy resin composition according to the procedure described in paragraph (6). Using the resulting prepreg, (7) preparation of composite material plate for Mode-I interlaminar toughness ($G_{IC}$) test and implementation of $G_{IC}$ measurement and (8) measurement of compression strength of fiber reinforced composite material were performed. Results are shown in Tables 1-1.

(Examples 2 to 14 and Comparative examples 1 to 9) (Examples 2-4, 6-8, 10, 11 and 14 are Reference Examples)

Except for using the amine type epoxy resin [A] or epoxy resin other than [A], the thermoplastic resin [B], the aromatic amine [C] or a curing agent other than [C], the thermoplastic resin particles [D], and other components in quantities as shown in Table 1, the same procedure as in Example 1 was carried out to produce an epoxy resin composition and prepreg. Using the resulting epoxy resin composition, (2) measurement of DSC cure degree of cured resin, (3) observation of phase structure in cured resin material, (4) measurement of bending deflection of cured resin material, and (5) measurement of glass transition temperature and rubber state elastic modulus of cured resin material were performed. Using the resulting prepreg, (7) preparation of composite material plate for Mode-I interlaminar toughness ($G_{IC}$) test and implementation of $G_{IC}$ measurement and (8) measurement of compression strength of fiber reinforced composite material were performed. Results obtained in Examples 2 to 8 are shown in Table 1-1, those in Examples 9 to 14 shown in Table 1-2, and those in Comparative examples 1 to 9 shown in Table 2.

(Examples 15 and 16 and Comparative examples 10 and 11) (Examples 15 and 16 are Reference Examples)

Except for using the amine type epoxy resin [A] or epoxy resin other than [A], the thermoplastic resin [B], and the aromatic amine [C] in quantities as shown in Tables 1 and 2, the same procedure as in Example 1 was carried out to produce an epoxy resin composition and prepreg. Using the resulting epoxy resin composition, (2) measurement of DSC cure degree of cured resin, (3) observation of phase structure in cured resin material, (4) measurement of bending deflection of cured resin material, and (5) measurement of glass transition temperature and rubber state elastic modulus of cured resin material were performed. Using the resulting prepreg, (7) preparation of composite material plate for Mode-I interlaminar toughness ($G_{IC}$) test and implementation of $G_{IC}$ measurement and (8) measurement of compression strength of fiber reinforced composite material were performed. Results obtained in Examples 15 and 16 are shown in Table 1-2, and those obtained in Comparative examples 10 and 11 are shown in Table 2.

In Tables 1-1 and 1-2, * denotes a Reference Example.

[Table 1-1]

| | Example 1* | Example 2* | Example 3* | Example 4* | Example 5 | Example 6* | Example 7* | Example 8* |
|---|---|---|---|---|---|---|---|---|
| Amine type epoxy resin [A] (parts by mass) | | | | | | | | |
| • Sumiepoxy ®ELM434 | | | | | | | | 30 |
| • TG3DAS | 20 | 20 | | 30 | 40 | | | |
| • Araldite® MY0510 | | | | | | 45 | 45 | |
| • Araldite® MY0600 | | | 60 | | | | | |
| • GAN | | | | 10 | 20 | | | 70 |
| • PxGAN | | | | | | | | |
| • DENACOL® Ex-731 | | | | | 10 | | | |
| Epoxy resin other than [A] (parts by mass) | | | | | | | | |
| • EPON® 825 | 80 | 80 | | 60 | | 55 | 55 | |
| • EPICLON® 830 | | | 40 | | 30 | | | |
| Thermoplastic resin [B] (parts by mass) | | | | | | | | |
| • SUMIKAEXCEL® PES5003P | 21 | | | | | | | |
| • Virantage® VW-10700RP | | | 19 | 17 | 19 | 24 | | 75 |
| • Virantage® VW-30500RP | | | | | | | 15 | |
| • PHENOTOHTO® YP-50 | | 15 | | | | | | |
| Aromatic amine [C] (parts by mass) | | | | | | | | |
| • 3,3'-DDS | | | | | 45 | | | |
| • 4,4'-DDS | 69 | 69 | 88 | 56 | | 72 | 72 | 39 |
| (Curing agent other than [C]) (parts by mass) | | | | | | | | |
| • DICY7 | | | | | | | | |
| Thermoplasticity particles [D] (parts by mass) | | | | | | | | |
| • Grilamide® TR-55 particles | 28 | 27 | 30 | 25 | 24 | 29 | 27 | 31 |
| • Orgasol® 1002D | | | | | | | | |

(continued)

| | | | | | | | | |
|---|---|---|---|---|---|---|---|---|
| Other component (parts by mass) | | | | | | | | |
| • DCMU99 | | | | | | | | |
| Number of moles of active hydrogen/number of moles of epoxy groups | 1.8 | 1.8 | 1.7 | 1.5 | 1.2 | 1.5 | 1.5 | 1.1 |
| Content of thermoplastic resin [B] in epoxy resin composition excluding [D] (mass%) | 11 | 8 | 9 | 10 | 12 | 12 | 8 | 35 |
| Characteristics of cured resin material | | | | | | | | |
| • DSC cure degree (%) | 100 | 97 | 100 | 100 | 98 | 100 | 98 | 98 |
| • phase structure | single phase | 450nm sea-island structure | single phase | single phase | single phase | single phase | 300nm sea-island structure | 100nm sea-island structure |
| • bending deflection quantity (mm) | 6.2 | 6.6 | 5.8 | 6.9 | 7.5 | 6.7 | 6.1 | 8.1 |
| • glass transition temperature X (°C) | 173 | 161 | 182 | 179 | 185 | 182 | 175 | 164 |
| • rubber state elastic modulus Y (MPa) | 2.8 | 3.0 | 7.1 | 4.8 | 5.9 | 4.0 | 5.3 | 3.5 |
| · Equation (1): 0.19X/°C - 31.5 ≦ Y/ MPa ≦ 0.19X/°C - 27 | 1.4 ≦ Y ≦ 5.9 | -0.9 ≦ Y ≦ 3.6 | 3.1 ≦ Y ≦ 7.6 | 2.5 ≦ Y ≦ 7.0 | 3.7 ≦ Y ≦ 8.2 | 3.1 ≦ Y ≦ 7.6 | 1.8 ≦ Y ≦ 6.3 | -0.3 ≦ Y ≦ 4.2 |
| Characteristics of carbon fiber reinforced composite material | | | | | | | | |
| • $G_{IC}$ ($J/m^2$) | 480 | 430 | 490 | 540 | 570 | 530 | 500 | 620 |
| • 0° compression strength (25°C) (MPa) | 1630 | 1510 | 1680 | 1650 | 1670 | 1640 | 1570 | 1540 |
| • 0° compression strength (140°C) (MPa) | 1240 | 1180 | 1360 | 1240 | 1480 | 1290 | 1230 | 1250 |

[Table 1-2]

| | Example 9 | Example 10* | Example 11* | Example 12 | Example 13 | Example 14* | Example 15* | Example 16* |
|---|---|---|---|---|---|---|---|---|
| Amine type epoxy resin [A] (parts by mass) | | | | | | | | |
| • Sumiepoxy® ELM434 | | | 40 | 70 | 30 | 30 | | |
| • TG3DAS | | 40 | | | | | 30 | |
| • Araldite® MY0510 | | 40 | | | 50 | 50 | | |
| • Araldite® MY0600 | 50 | | | | | | | 40 |
| • GAN | | | | 30 | 20 | 20 | | |
| • PxGAN | | | | | | | | |
| • DENACOL® Ex-731 | | | | | | | | |
| Epoxy resin other than [A](parts by mass) | | | | | | | | |
| • EPON® 825 | 25 | | | | | | | |
| • EPICLON® 830 | 25 | 20 | 60 | | | | 70 | 60 |
| Thermoplastic resin [B] (parts by mass) | | | | | | | | |
| • SUMIKAEXCEL® PES5003P | | | | | | | | |
| • Virantage® VW-10700RP | 42 | 17 | 53 | 33 | 42 | 40 | 39 | 68 |
| • Virantage® VW-30500RP | | | | | | | | |
| • PHENOTOHTO® YP-50 | | | | | | | | |
| Aromatic amine [C] (parts by mass) | | | | | | | | |
| • 3,3'-DDS | | 52 | | | 69 | 58 | | |
| • 4,4'-DDS | 67 | | 58 | 59 | | | 76 | 60 |
| (curing agent other than [C]) (parts by mass) | | | | | | | | |
| • DICY7 | | | | | | | | |
| Thermoplasticity particles [D] (parts by mass) | | | | | | | | |
| • Grilamide® TR-55 particles | 31 | | 31 | 28 | 31 | 29 | | |
| • Orgasol® 1002D | | 25 | | | | | | |

(continued)

| | | | | | | | | |
|---|---|---|---|---|---|---|---|---|
| Other component (parts by mass) | | | | | | | | |
| • DCMU99 | | | | | | | | |
| Number of moles of active hydrogen / number of moles of epoxy groups | 1.4 | 1.1 | 1.4 | 1.3 | 1.3 | 1.1 | 2.0 | 1.3 |
| Content of thermoplastic resin [B] in epoxy resin composition excluding [D] (mass%) | 20 | 10 | 25 | 17 | 20 | 20 | 18 | 30 |
| Characteristics of cured resin material | | | | | | | | |
| • DSC cure degree (%) | 100 | 96 | 100 | 100 | 100 | 100 | 100 | 100 |
| • phase structure | single phase | single phase | single phase | single phase | single phase | 200nm sea-island structure | single phase | single phase |
| • bending deflection quantity (mm) | 7.9 | 5.8 | 8.2 | 7.0 | 6.3 | 5.5 | 5.6 | 8.8 |
| • glass transition temperature X(°C) | 186 | 194 | 180 | 204 | 195 | 190 | 163 | 179 |
| • rubber state elastic modulus Y (MPa) | 5.1 | 9.4 | 5.4 | 8.3 | 6.8 | 8.8 | 1.9 | 5.7 |
| · Equation (1) : 0.19X/°C- 31.5 ≦ Y/ MPa ≦ 0.19X/°C- 27 | 3.8 ≦ Y ≦ 8.3 | 5.4 ≦ Y ≦ 9.9 | 2.7 ≦ Y ≦ 7.2 | 7.3 ≦ Y ≦ 11.8 | 5.6 ≦ Y ≦ 10.1 | 4.6 ≦ Y ≦ 9.1 | -0.5 ≦ Y ≦ 4.0 | 2.5 ≦ Y ≦ 7.0 |
| Characteristics of carbon fiber reinforced composite material | | | | | | | | |
| • $G_{IC}$ (J/m$^2$) | 590 | 540 | 630 | 540 | 600 | 580 | 320 | 440 |
| • 0°compression strength (25°C) (MPa) | 1650 | 1780 | 1620 | 1750 | 1700 | 1680 | 1610 | 1590 |
| • 0°compression strength (140°C) (MPa) | 1240 | 1400 | 1200 | 1520 | 1450 | 1460 | 1240 | 1150 |

[Table 2]

| | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 | Comparative example 11 |
|---|---|---|---|---|---|---|---|---|---|---|---|
| Amine type epoxy resin [A] (parts by mass) | | | | | | | | | | | |
| • SUMI-EPOXY® ELM434 | | | | | | | 30 | 20 | | 50 | |
| • TG3DAS | | 55 | | | | | | | 40 | | |
| • Araldite® MY0510 | | | | 40 | 50 | 65 | 50 | | | | 100 |
| • Araldite® MY0600 | | | 80 | | | | | | | | |
| • GAN | | | | | | | 20 | 30 | | | |
| • PxGAN | | | | | | | | | 40 | | |
| • DENACOL® Ex-731 | | | | | | | | | | 50 | |
| Epoxy resin other than [A] (parts by mass) | | | | | | | | | | | |
| • EPON® 825 | 70 | | 20 | | | | | | 20 | | |
| • EPICLON® 830 | 30 | 45 | | 60 | 50 | 35 | | 50 | | | |
| Thermoplastic resin [B] (parts by mass) | | | | | | | | | | | |
| SUMIKAEXCEL® PES5003P | | | | | | | | | 11 | 10 | |
| Virantage® VW-10700RFP | 74 | | 27 | 53 | 50 | 53 | 37 | 20 | | | |
| Virantage® VW-30500RP | | | | | | | | | | | 117 |
| PHENOTOHTO® YP-50 | | | | | | | | | | | |
| Aromatic amine [C] (parts by mass) | | | | | | | | | | | |
| • 3,3'-DDS | 72 | | | | | | 48 | | | | |
| • 4,4'-DDS | | 45 | | 46 | 49 | 53 | | 81 | 49 | 45 | 75 |

(continued)

| | | | | | | | | | | | |
|---|---|---|---|---|---|---|---|---|---|---|---|
| (curing agent other than [C]) (parts by mass) | | | | | | | | | | | |
| • DICY7 | | | 11 | | | | | | | | |
| Thermoplasticity particles [D] (parts by mass) | | | | | | | | | | | |
| Grilamide® TR-55 particles | 36 | 21 | 21 | 29 | 29 | 30 | 27 | 30 | 20 | | |
| • Orgasol® 1002D | | | | | | | | | | | |
| Other component (parts by mass) | | | | | | | | | | | |
| • DCMU99 | | | 3 | | | | | | | | |
| Number of moles of active hydrogen / number of moles of epoxy qroups | 2.0 | 1.1 | 1.0 | 1.0 | 1.0 | 1.0 | 0.9 | 2.2 | 1.2 | 1.1 | 1.2 |
| Content of thermoplastic resin [B] in epoxy resin composition excluding [D] (mass%) | 30 | 0 | 19 | 27 | 25 | 26 | 20 | 10 | 7 | 6 | 40 |
| Characteristics of cured resin material | | | | | | | | | | | |
| • DSC cure degree (%) | 100 | 99 | 97 | 99 | 98 | 97 | 100 | - | 98 | 97 | 94 |
| • phase structure | single phase | single phase | single phase | single phase | single phase | single phase | 700nm sea-island structure | - | single phase | single phase | 1 μm sea-island structure |
| • bending deflection quantity (mm) | 12.0 | 2.5 | 3.2 | 4.9 | 4.5 | 4.0 | 4.2 | - | 4.6 | 4.0 | 3.9 |
| • glass transition temperature X (°C) | 130 | 178 | 188 | 167 | 175 | 190 | 180 | - | 170 | 173 | 169 |
| • rubber state elastic modulus Y (MPa) | 2.2 | 11.2 | 12.3 | 9.9 | 11.4 | 14.2 | 12.2 | - | 7.7 | 9.7 | 8.2 |
| • Equation (1): $0.19X/°C - 31.5 \leqq Y/MPa \leqq 0.19X/°C - 27$ | $-6.8 \leqq Y \leqq -2.3$ | $2.3 \leqq Y \leqq 6.8$ | $4.2 \leqq Y \leqq 8.7$ | $0.2 \leqq Y \leqq 4.7$ | $1.8 \leqq Y \leqq 6.3$ | $4.6 \leqq Y \leqq 9.1$ | $2.7 \leqq Y \leqq 7.2$ | - | $0.8 \leqq Y \leqq 5.3$ | $1.4 \leqq Y \leqq 5.9$ | $0.6 \leqq Y \leqq 5.1$ |

(continued)

| Characteristics of carbon fiber reinforced composite material | | | | | | | | | | | |
|---|---|---|---|---|---|---|---|---|---|---|---|
| • $G_{IG}$ (J/m$^2$) | 730 | 260 | 290 | 420 | 400 | 390 | 530 | - | 260 | 170 | 360 |
| • 0° compression strength (25°C) (MPa) | 1420 | 1830 | 1590 | 1620 | 1630 | 1660 | 1560 | - | 1690 | 1630 | 1650 |
| • 0° compression strength (140°C) (MPa) | 850 | 1380 | 1210 | 1120 | 1130 | 1140 | 1370 | - | 1350 | 1140 | 1240 |

Comparison between Examples 1 to 16 (Examples 1-4, 6-8, 10, 11 and 14-16 being Reference Examples) and Comparative examples 1 to 11 reveals that the cured resin material according to the present invention show resin elongation and heat resistance and that the fiber reinforced composite material is high in $G_{IC}$ and in 0° compression strength at high temperatures.

Comparison between Examples 1 to 16 (Examples 1-4, 6-8, 10, 11 and 14-16 being Reference Examples) and Comparative example 1 reveals that even in the case where the thermoplastic resin [B] and the aromatic amine [C] are contained in required quantities and where at the same time, the number of moles of active hydrogen contained in [C] is 1.05 to 2.0 times as large as the number of moles of epoxy groups contained in the entire epoxy resin composition, the absence of the amine type epoxy resin [A] causes the glass transition temperature and the rubber state elastic modulus to fail to meet the relation $0.19X/°C - 31.5 \leqq Y/MPa \leqq 0.19X/°C - 27$ (where X denotes the glass transition temperature (°C) and Y denotes the rubber state elastic modulus (MPa)), resulting particularly in fiber reinforced composite material with decreased 0° compression strength at high temperatures.

Comparison between Examples 1 to 16 (Examples 1-4, 6-8, 10, 11 and 14-16 being Reference Examples) and Comparative example 2 reveals that even in the case where the amine type epoxy resin [A] and the aromatic amine [C] are contained in required quantities and where at the same time, the number of moles of active hydrogen contained in [C] is 1.05 to 2.0 times as large as the number of moles of epoxy groups contained in the entire epoxy resin composition, the absence of the thermoplastic resin [B] in required quantities causes the glass transition temperature and the rubber state elastic modulus to fail to meet the relation $0.19X/°C - 31.5 \leqq Y/MPa \leqq 0.19X/°C - 27$ (where X denotes the glass transition temperature (°C) and Y denotes the rubber state elastic modulus (MPa)), resulting particularly in fiber reinforced composite material with decreased $G_{IC}$.

Comparison between Examples 1 to 16 (Examples 1-4, 6-8, 10, 11 and 14-16 being Reference Examples) and Comparative example 3 reveals that even in the case where the amine type epoxy resin [A] and a required quantity of the thermoplastic resin [B] are contained, the absence of the aromatic amine [C] causes the glass transition temperature and the rubber state elastic modulus to fail to meet the relation $0.19X/°C - 31.5 \leqq Y/MPa \leqq 0.19X/°C - 27$ (where X denotes the glass transition temperature (°C) and Y denotes the rubber state elastic modulus (MPa)), resulting particularly in fiber reinforced composite material with decreased $G_{IC}$.

Comparison between Example 6 (Reference) and Comparative examples 4 to 6 reveals that even in the case where the amine type epoxy resin [A], a required quantity of the thermoplastic resin [B], and the aromatic amine [C] are contained, a state where the number of moles of active hydrogen contained in [C] is less than 1.05 times as large as the number of moles of epoxy groups contained in the entire epoxy resin composition and where at the same time the phase separated structure is a single phase structure causes the glass transition temperature and the rubber state elastic modulus to fail to meet the relation $0.19X/°C - 31.5 \leqq Y/MPa \leqq 0.19X/°C - 27$ (where X denotes the glass transition temperature (°C) and Y denotes the rubber state elastic modulus (MPa)), resulting particularly in fiber reinforced composite material with decreased $G_{IC}$.

Comparison between Examples 13 and 14 (Example 14 being a Reference Example) and Comparative example 7 reveals that in the case where the amine type epoxy resin [A], a required quantity of the thermoplastic resin [B], and the aromatic amine [C] are contained, but the number of moles of active hydrogen contained in [C] is less than 1.05 times as large as the number of moles of epoxy groups contained in the entire epoxy resin composition, and the phase separated structure is has a size of 500 nm or more, the glass transition temperature and the rubber state elastic modulus fail to meet the relation $0.19X/°C - 31.5 \leqq Y/MPa \leqq 0.19X/°C - 27$ (where X denotes the glass transition temperature (°C) and Y denotes the rubber state elastic modulus (MPa)), resulting in fiber reinforced composite material with decreased $G_{IC}$ and decreased 0° compression strength at normal temperature.

Comparison between Examples 1 to 16 (Examples 1-4, 6-8, 10, 11 and 14-16 being Reference Examples) and Comparative example 8 reveals that in the case where the amine type epoxy resin [A], a required quantity of the thermoplastic resin [B], and the aromatic amine [C] are contained, but the number of moles of active hydrogen contained in [C] is more than 2.0 times as large as the number of moles of epoxy groups contained in the entire epoxy resin composition, the epoxy resin composition was too high in viscosity, failing to prepare an epoxy resin composition.

Comparison between Examples 1 to 16 (Examples 1-4, 6-8, 10, 11 and 14-16 being Reference Examples) and Comparative examples 9 and 10 reveals that in the case where the amine type epoxy resin [A], the thermoplastic resin [B], and the aromatic amine [C] are contained and in addition, the number of moles of active hydrogen contained in [C] is 1.05 to 2.0 times as large as the number of moles of epoxy groups contained in the entire epoxy resin composition, but the thermoplastic resin [B] fails to account for 8 to 40 mass% of the epoxy resin composition, the glass transition temperature and the rubber state elastic modulus fail to meet the relation $0.19X/°C - 31.5 \leqq Y/MPa \leqq 0.19X/°C - 27$ (where X denotes the glass transition temperature (°C) and Y denotes the rubber state elastic modulus (MPa)), resulting particularly in fiber reinforced composite material with decreased $G_{IC}$.

Comparison between Example 16 (Reference) and Comparative example 11 reveals that in the case where the amine type epoxy resin [A], a required quantity of the thermoplastic resin [B], and the aromatic amine [C] are contained and in addition, the number of moles of active hydrogen contained in [C] is 1.05 to 2.0 times as large as the number of

moles of epoxy groups contained in the entire epoxy resin composition, but [A], [B], and [C] form a coarse sea-island structure with a size of 1 μm, the glass transition temperature and the rubber state elastic modulus fail to meet the relation 0.19X/°C - 31.5 ≦ Y/MPa ≦ 0.19X/°C - 27 (where X denotes the glass transition temperature (°C) and Y denotes the rubber state elastic modulus (MPa)), resulting in fiber reinforced composite material with decreased $G_{IC}$.

Industrial Applicability

The present invention serves to provide an epoxy resin composition having an improved resin elongation percentage and heat resistance. Such an epoxy resin composition serves to produce fiber reinforced composite material that is high in compression strength and interlaminar toughness and accordingly suitable particularly for manufacturing structural members. Their preferred applications in the aerospace industry include, for instance, primary structural members of aircraft such as main wing, tail unit, and floor beam; secondary structural members such as flap, aileron, cowl, fairing, and other interior materials; and structural members of artificial satellites such as rocket motor case. Their preferred applications for general industrial uses include structural members of vehicles such as automobiles, ships, and railroad vehicles; and civil engineering and construction materials such as drive shafts, plate springs, windmill blades, various turbines, pressure vessels, flywheels, rollers for paper manufacture, roofing materials, cables, reinforcing bars, and mending/reinforcing materials. Applications in the sporting goods industry include golf shafts, fishing poles, rackets for tennis, badminton, squash, etc., hockey sticks, and skiing poles.

## Claims

**1.** An epoxy resin composition comprising the constitutional elements [A], [B], [C], and [D] listed below,

[A] accounting for 50 to 100 parts by mass in the total quantity 100 parts by mass of the epoxy resin,
[B] accounting for 12 to 35 mass% in 100 mass% of the epoxy resin composition that excludes thermoplastic resin particle [D], and [B] having a glass transition temperature of 150°C or more, measured as described in the experimental part of the description,

the number of moles of the active hydrogen contained in [C] being 1.2 to 1.5 times as large as the number of moles of epoxy groups contained in the entire epoxy resin composition,
[A], [B], and [C] having a single phase structure or a below-500-nm phase separated structure in cured material with a cure degree of 90% or more, as calculated by the Equation (2) given below from the total calorific value QT of the epoxy resin composition and the residual calorific value QR of the cured material, as determined by DSC (differential scanning calorimetry) produced by curing the epoxy resin composition that excludes thermoplastic resin particle [D], and
the glass transition temperature X (°C) and the rubber state elastic modulus Y (MPa), which is the storage elastic modulus at a temperature 50°C higher than the glass transition temperature of the cured material as determined by DMA (dynamic mechanical analysis), meeting the Equation (1) given below:

[A] amine type epoxy resin
[B] thermoplastic resin that is dissolved in the epoxy resin composition
[C] diaminodiphenyl sulfone and isomers thereof
[D] thermoplastic resin particle that is at least one resin selected from the group consisting of polyamide, polyimide, polyamideimide, polycarbonate, and polyphenylene sulfide, and that is insoluble in the epoxy resin.

$$0.19X/°C - 31.5 \leqq Y/MPa \leqq 0.19X/°C - 27 \qquad (1)$$

$$\text{Cure degree (\%)} = (QT - QR) / QT \times 100 \qquad (2)$$

**2.** An epoxy resin composition as set forth in claim 1, wherein the amine type epoxy resin [A] is at least one selected from the group consisting of tetraglycidyl diaminodiphenyl methane, triglycidyl aminophenol, halogen substitutes thereof, alkyl substitutes thereof, and hydrogenated products thereof.

**3.** An epoxy resin composition as set forth in claim 1 or 2, wherein the amine type epoxy resin [A] contains a bifunctional

amine type epoxy resin and a tri- or more functional amine type epoxy resin.

4. An epoxy resin composition as set forth in any one of claims 1 to 3, wherein the thermoplastic resin [B] is polyethersulfone.

5. An epoxy resin composition as set forth in any one of claims 1 to 4, wherein the aromatic amine [C] is diaminodiphenyl sulfone or a derivative or isomer thereof.

6. Cured resin material produced by curing an epoxy resin composition as set forth in any one of claims 1 to 5.

7. Prepreg produced by impregnating reinforcement fiber with an epoxy resin composition as set forth in any one of claims 1 to 5.

8. Fiber reinforced composite material comprising reinforcement fiber and cured resin material as set forth in claim 6.

9. Fiber reinforced composite material produced by curing prepreg as set forth in claim 7.

**Patentansprüche**

1. Epoxyharzzusammensetzung, die die nachstehend angeführten Komponenten [A], [B], [C] und [D] umfasst, wobei

[A] 50 bis 100 Massenteile in der Gesamtmenge von 100 Massenteilen des Epoxyharzes ausmacht,
[B] 12 bis 35 Massen-% in 100 Massen-% der Epoxyharzzusammensetzung ausmacht, die das thermoplastische Harzteilchen [D] nicht umfasst, und [B] eine wie im experimentellen Teil der Beschreibung beschrieben gemessene Glasübergangstemperatur von 150 °C oder mehr aufweist,

die Molanzahl an in [C] enthaltenem aktivem Wasserstoff 1,2- bis 1,5-mal so groß wie die Molanzahl an in der gesamten Epoxyharzzusammensetzung enthaltenen Epoxygruppen ist,
[A], [B] und [C] eine einphasige Struktur oder eine phasengetrennte Struktur unter 500 nm in gehärtetem Material mit einem Härtungsgrad von 90 % oder mehr aufweisen, der anhand der folgenden Gleichung (2) aus dem Gesamtbrennwert QT der Epoxyharzzusammensetzung und dem Restbrennwerts QR eines gehärteten Materials berechnet wird, das durch Härten der Epoxyharzzusammensetzung, die die thermoplastischen Harzteilchen [D] nicht umfasst, hergestellt wurde, die mittels DSC (dynamischer Differenzkalorimetrie) gemessen wurden, und
die Glasübergangstemperatur X (°C) und der Elastizitätsmodul im Gummizustand Y (MPa), der der durch DMA (dynamische mechanische Analyse) bestimmte Speicherelastizitätsmodul bei einer Temperatur von 50 °C über der Glasübergangstemperatur des gehärteten Materials ist, der nachstehenden Gleichung (1) genügt:

[A] Amintyp-Epoxyharz
[B] thermoplastisches Harz, das in der Epoxyharzzusammensetzung gelöst ist
[C] Diamiodiphenylsulfon und Isomere davon
[D] thermoplastische Harzteilchen, die zumindest ein aus der aus Polyamid, Polyimid, Polyamidimid, Polycarbonat und Polyphenylenslufid bestehenden Gruppe ausgewähltes Harz und im Epoxyharz unlöslich sind;

$$0{,}19\,X\,(°C) - 31{,}5 \leq Y\,(MPa) \leq 0{,}19\,X\,(°C) - 27 \qquad (1)$$

$$\text{Härtungsgrad}\,(\%) = (QT - QR) / QT \times 100 \qquad (2)$$

2. Epoxyharzzusammensetzung nach Anspruch 1, wobei das Amintyp-Epoxyharz [A] zumindest eines, ausgewählt aus der aus Tetraglycidyl, Diaminodiphenylmethan, Triglycidylaminophenol, Halogensubstitutionsprodukten davon, Alkylsubstitutionsprodukten davon und hydrierten Produkten davon bestehenden Gruppe ist.

3. Epoxyharzzusammensetzung nach Anspruch 1 oder 2, wobei das Amintyp-Epoxyharz [A] ein bifunktionelles Amintyp-Epoxyharz und ein tri- oder höherfunktionelles Amintyp-Epoxyharz umfasst.

4. Epoxyharzzusammensetzung nach einem der Ansprüche 1 bis 3, wobei das thermoplastische Harz [B] Polyethersulfon ist.

5. Epoxyharzzusammensetzung nach einem der Ansprüche 1 bis 4, wobei das aromatische Amin [C] Diaminodiphenylsulfon oder ein Derivat oder Isomer davon ist.

6. Gehärtetes Harzmaterial, das durch Härten einer Epoxyharzzusammensetzung nach einem der Ansprüche 1 bis 5 wurde.

7. Prepreg, das durch Imprägnieren von Verstärkungsfasern mit einer Epoxyharzzusammensetzung nach einem der Ansprüche 1 bis 5 hergestellt wurde.

8. Faserverstärkter Verbundwerkstoff, der Verstärkungsfasern und gehärtetes Harzmaterial nach Anspruch 6 umfasst.

9. Faserverstärkter Verbundwerkstoff, der durch Härten eines Prepregs nach Anspruch 7 hergestellt wurde.

**Revendications**

1. Composition de résine époxy comprenant les éléments constitutifs [A], [B], [C] et [D] énumérés ci-dessous,

[A] représentant de 50 à 100 parties en masse de la quantité totale de 100 parties en masse de la résine époxy, [B] représentant de 12 à 35 % en masse de 100 % en masse de la composition de résine époxy qui exclut des particules de résine thermoplastique [D], et [B] ayant une température de transition vitreuse de 150°C ou plus, mesurée comme décrit dans la partie expérimentale de la description,

le nombre de moles de l'hydrogène actif contenu dans [C] étant 1,2 à 1,5 fois supérieur au nombre de moles de groupes époxy contenus dans l'ensemble de la composition de résine époxy,
[A], [B] et [C] ayant une structure monophasée ou une structure à phase séparée inférieure à 500 nm dans un matériau durci ayant un degré de durcissement supérieur ou égal à 90 %, calculée à l'aide de l'équation (2) donnée ci-dessous à partir de la valeur calorifique totale QT de la composition de résine époxy et de la valeur calorifique résiduelle QR du matériau durci, comme déterminé par DSC (calorimétrie différentielle à balayage) réalisée en faisant durcir la composition de résine époxy excluant les particules de résine thermoplastique [D], et
la température de transition vitreuse X (°C) et le module d'élasticité d'état de caoutchouc Y (MPa), qui est le module d'élasticité de stockage à une température supérieure de 50°C à la température de transition vitreuse du matériau durci, comme déterminé par DMA (analyse mécanique dynamique), répondant à l'équation (1) donnée ci-dessous :

[A] résine époxy de type amine
[B] résine thermoplastique qui est dissoute dans la composition de résine époxy
[C] diaminodiphénylsulfone et des isomères de celle-ci
[D] particule de résine thermoplastique qui est au moins une résine choisie dans le groupe comprenant le polyamide, le polyimide, le polyamideimide, le polycarbonate et le sulfure de polyphénylène, et qui est insoluble dans la résine époxy.

$$0{,}19X\ /°C - 31{,}5 \leq Y/MPa \leq 0{,}19X\ /°C - 27 \qquad (1)$$

$$\text{Degré de durcissement } (\%) = (QT - QR)/QT \times 100 \qquad (2)$$

2. Composition de résine époxy selon la revendication 1, dans laquelle la résine époxy de type amine [A] est au moins une choisie dans le groupe comprenant le tétraglycidyl diaminodiphénylméthane, le triglycidylaminophénol, des substituts halogènes de ceux-ci, des substituts alkyles de ceux-ci, et des produits hydrogénés de ceux-ci.

3. Composition de résine époxy selon la revendication 1 ou 2, dans laquelle la résine époxy de type amine [A] contient une résine époxy de type amine bifonctionnelle et une résine époxy de type amine trifonctionnelle ou plus.

4. Composition de résine époxy selon l'une quelconque des revendications 1 à 3, dans laquelle la résine thermoplastique [B] est une polyéthersulfone.

5. Composition de résine époxy selon l'une quelconque des revendications 1 à 4, dans laquelle l'amine aromatique [C] est la diaminodiphénylsulfone ou un dérivé ou un isomère de celle-ci.

6. Matériau de résine durcie produit en faisant durci une composition de résine époxy selon l'une quelconque des revendications 1 à 5.

7. Préimprégné produit en imprégnant une fibre de renforcement avec une composition de résine époxy selon l'une quelconque des revendications 1 à 5.

8. Matériau composite renforcé par des fibres comprenant une fibre de renforcement et un matériau de résine durcie selon la revendication 6.

9. Matériau composite renforcé par des fibres produit en faisant durcir le préimprégné selon la revendication 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO61228016 B
- WO 2010109929 A
- WO 2014112180 A
- WO 2015005411 A